Europäisches Patentamt

European Patent Office

Office européen des brevets

(19)

(11) **EP 1 642 049 B1**

(12) **EUROPEAN PATENT SPECIFICATION**

(45) Date of publication and mention
of the grant of the patent:
**25.10.2006 Bulletin 2006/43**

(51) Int Cl.:
*F16H 61/00* (2006.01)      *F16H 55/56* (2006.01)
*F16H 9/18* (2006.01)

(21) Application number: **04748621.2**

(86) International application number:
**PCT/NL2004/000389**

(22) Date of filing: **28.05.2004**

(87) International publication number:
**WO 2004/111500 (23.12.2004 Gazette 2004/52)**

(54) **CONTINUOUSLY VARIABLE TRANSMISSION**

STUFENLOS VERSTELLBARES GETRIEBE

TRANSMISSION A CHANGEMENT DE VITESSES CONTINU

(84) Designated Contracting States:
**AT BE BG CH CY CZ DE DK EE ES FI FR GB GR HU IE IT LI LU MC NL PL PT RO SE SI SK TR**

(30) Priority: **16.06.2003  NL 1023668**

(43) Date of publication of application:
**05.04.2006  Bulletin 2006/14**

(73) Proprietor: **ROBERT BOSCH GMBH
70442 Stuttgart (DE)**

(72) Inventors:
• **VAN DER LEEST, Adrianus, Johannes, Wilhelmus**
  **NL-5388 RX Nistelrode (NL)**
• **BRANDSMA, Arjen**
  **NL-5045 WN Tilburg (NL)**
• **VAN SPIJK, Johannes, Gerardus, Ludovicus, Maria**
  **NL-5151 BM Drunen (NL)**

(74) Representative: **Plevier, Gabriel Anton Johan Maria
Van Doorne's Transmissie B.V.,
Patents Department,
Postbus 500
5000 AM  Tilburg (NL)**

(56) References cited:
| | |
|---|---|
| **EP-A- 0 931 959** | **WO-A-01/20198** |
| **DE-A- 10 018 243** | **US-A- 2 431 494** |
| **US-A- 3 757 594** | **US-A- 5 328 412** |
| **US-A1- 2002 042 313** | |

**Description**

The present invention relates to a continuously variable transmission in accordance with the preambles of Claim 1 and Claim 2. A transmission of this type is generally known and is used to transmit mechanical power between the primary and secondary pulleys of the transmission, it being possible for a transmission ratio of the transmission with which a couple or rotational speed is transmitted to be varied continuously within a certain range. As is known, the drive belt is clamped between the two pulley discs, which are substantially frustoconical or conical in form, of the respective pulleys; in the present invention, the transmission ratio of the transmission is defined as the ratio between an effective radial position of the drive belt on the secondary pulley and an effective radial position of the drive belt on the primary pulley, which positions are respectively also known as the secondary running radius and the primary running radius. To enable these running radii, and therefore the transmission ratio, to be varied, at least one of the pulley discs of each pulley is arranged such that it can be moved in the axial direction.

By way of example, it is known from European patent application EP-A-1 218 654 that the two axially oriented forces with which the drive belt is clamped between the pulley discs of the pulleys, referred to below as the primary clamping force and the secondary clamping force, respectively, represent a crucial factor in determining the torque which can be transmitted between the pulleys via frictional forces between the pulleys and the drive belt, while the ratio between these clamping forces is a crucial factor in determining the transmission ratio. It should be noted that the minimum clamping force required for each pulley to transmit a torque which is supplied can be approximated by the following equation:

$$Kp = \frac{Tp * \cos(\lambda)}{2 * \mu_T * Rp} \tag{1}$$

In this equation, Kp is the minimum clamping force which is to be exerted on the drive belt by a pulley disc of the primary pulley in order for a primary torque Tp which is supplied to this primary pulley to be transmitted, i.e. virtually without any slip between the drive belt and the respective pulley disc in the tangential or circumferential direction, with a tangent line on the pulley disc at the location of an effective contact point between this pulley disc and the drive belt forming a contact angle $\lambda$ with the radial direction, the said point of contact being located at a radial distance Rp from a centre of rotation of the pulley, which distance corresponds to the said primary running radius, with an effective coefficient of friction $\mu_T$ between the drive belt and the pulley disc prevailing in this tangential direction.

The minimum secondary clamping force Ks required can be calculated in a corresponding way from a secondary torque Ts and a secondary running radius Rs. However, since the ratio between the torque and the running radius Tp/Rp, and Ts/Rs, respectively, ignoring possible losses, is inevitably equal for the two pulleys, the minimum secondary clamping force required is equal to the said minimum primary clamping force required.

In practice, a ratio between the primary and secondary clamping forces, referred for short as the clamping force ratio, will, however, have to be significantly higher or lower than 1, in order to enable a defined desired transmission ratio to be realised. The clamping force ratio required for an equilibrium state of the transmission, i.e. a constant transmission ratio, is referred to below as the equilibrium clamping force ratio, denoted here as the KpKs ratio. For the known transmission, the equilibrium clamping force ratio has a different value in different transmission ratios, this equilibrium clamping force ratio generally being greater than 1 at least in numerically the lowest transmission ratio, i.e. Overdrive, and less than 1 at least in numerically the highest transmission ratio, i.e. Low. The relationship between the transmission ratios of the transmission and the associated equilibrium clamping force ratio for a constant transmission ratio is referred to below as the KpKs curve for short. In a non-equilibrium state of the transmission, in which the transmission ratio is decreasing or increasing, the clamping force ratio required is raised or lowered, respectively, with respect to the said equilibrium clamping force ratio, the extent to which a clamping force ratio which is actually effected, referred to here as the FpFs ratio, deviates from the equilibrium clamping force ratio being the crucial factor in determining the speed at which the transmission ratio changes.

In the equilibrium state of the transmission, therefore, the lower out of the primary and secondary clamping forces has to be at least equal to the minimum level required for the torque transmission, while the higher of the clamping forces is then given by the equilibrium clamping force ratio, i.e. the KpKs ratio. If the KpKs ratio deviates from 1, therefore, at least one of the clamping forces will adopt a higher level than the said minimum required level in order to realise the equilibrium state.

It should be noted that the clamping forces are effected with the aid of suitable, generally known actuation means, which usually act on the axially moveable disc of a pulley, such as a hydraulically acting piston/cylinder assembly or an electrically driven threaded spindle. The clamping forces for each pulley act on the drive belt over the length of a part of the drive belt which is clamped between the respective pulley discs. In the definition according to the invention, the said length is quantified per pulley as the angle which is enclosed by the respectively clamped part of the drive belt and is referred to as the primary and secondary belt angle. In this case, the sum of the primary belt angle and the secondary belt angle is, of course, equal to $2\pi$, i.e. the arc of a circle described by the drive belt for each pulley together always form a complete circle.

Moreover, in the known transmission, at least for one of the pulleys, the said minimum required clamping force is increased and/or multiplied by a safety factor which defines the clamping force which is ultimately desired and actually applied. The effect of an increase of this nature is to ensure that any inaccuracy in the parameters from equation (1) or, for example, an excessively rapid increase in the torque supplied does not cause the abovementioned slipping of the push belt and a pulley. Also, the safety factor forms a kind of margin above the minimum required level of the clamping forces, which margin makes it possible to move from the said equilibrium state, in which the transmission ratio is constant, to a non-equilibrium state, in which the transmission ratio changes, by reducing one of the two clamping forces with respect to the value which is required for this force according to the KpKs ratio instead of increasing the respective other clamping force without this immediately leading to the abovementioned slipping. Control of this nature has the advantage that it can react relatively quickly to a desired change in the transmission ratio and, moreover, that the transmission ratio of the transmission can be controlled in both directions by controlling just one of the two clamping forces. In the known transmission, a numerical value of 1.3 for the safety factor is considered as a generally applicable lower limit for this factor.

In practice, the known transmission has proven in particular to be a reliable and efficient automatic transmission between the engine and the driven wheels of a motor vehicle for passenger transportation. In an application of this nature, the efficiency of the drive overall, and that of the transmission in particular, is generally considered an essential if not decisive characteristic of the vehicle. Therefore, it is an object of the present invention to provide an alternative design of the transmission which allows its efficiency to be considerably improved.

According to the invention, an improvement of this nature is realised in the transmission according to Claim 1 and Claim 2. The transmission according to the invention is characterized in that the contact angles, more particularly the ratio between the tangent of the contact angle on the primary pulley and that on the secondary pulley, at least in numerically the lowest transmission ratio, i.e. Overdrive, and/or in numerically the highest transmission ratio, i.e. Low, are in a relationship with respect to one another which corresponds to the inverse of the ratio of the belt angles on the primary pulley and on the secondary pulley.

The Applicant has discovered that in the transmission according to the invention, the efficiency and robustness of the transmission are greatly improved compared to the known transmission. According to the invention, the claimed transmission even represents an optimum design with regard to a number of functional aspects thereof. One possible explanation which has been hypothesized for this remarkable discovery is that the prescribed relationship between the contact angles and the belt angles contributes to a favourable change in the equilibrium clamping force ratio and, more particularly, to the equilibrium clamping force ratio having a numerical value which is at least approximately equal to 1.

This particular equilibrium ratio of the clamping forces, the KpKs ratio, according to the invention has a positive effect on the efficiency and the robustness of the transmission, since the more the highest level of the clamping forces in a specific transmission ratio decreases, the further these two aspects are improved. For example, a frictional loss between drive belt and pulley decreases as the clamping force level decreases, as does wear to these components. Also, the power which is required to generate the clamping forces, for example hydraulically or electrically, generally decreases with the level of force which is to be generated. The efficiency of the transmission is therefore inversely related to the maximum level of the clamping forces. A KpKs ratio equal to 1 represents the optimum ratio between the clamping forces, the level of the clamping forces for the two pulleys being determined exclusively by the torque supplied, so that the highest level of the clamping forces is minimized.

In this case, on the one hand the value of the KpKs ratio in Overdrive is a decisive factor in the fuel consumption of a motor vehicle, which represents the most important application of the transmission, on account of the fact that in such an application the transmission is generally in or close to Overdrive for a relatively long time, if not most of the time. On the other hand, the value of the KpKs ratio in Low is also of importance for the efficiency of the transmission, since in this transmission ratio the primary running radius is lowest, and therefore the primary clamping force required according to equation (1) is highest, at least if the maximum torque supplied in all the other transmission ratios is equal or lower, as is once again the case when the transmission is employed in a motor vehicle.

In the optimum scenario, the KpKs ratio is also virtually equal to 1 over the entire range of transmission ratios of the transmission between Low and Overdrive. Starting from a given equilibrium state of the transmission with a constant transmission ratio, an increase in the primary and/or secondary clamping force with respect to the minimum value required for this in accordance with equation (1), this increase being applied by the transmission control, leads to a non-equilibrium state, with the result that the transmission ratio of the transmission will start to change at a defined speed and in a defined direction. The result of this is that the said increase which has been applied is cancelled out again.

Moreover, according to the invention it can be stated in more general terms that a more or less constant value of the KpKs ratio is advantageous, i.e. irrespective of the numerical value of this ratio, since the transmission will then react to a change in the primary and/or secondary clamping force in virtually the same way in any transmission ratio.

For example, in an equilibrium clamping force ratio with a constant numerical value, the dynamic performance of the transmission in a non-equilibrium, state, such as the direction and speed with which the transmission ratio is changing, as a function of the abovementioned change which is applied, will advantageously be more or less constant, or at least will vary to a lesser extent with this transmission ratio. This has the advantages that the transmission control can be adjusted in a relatively simple way and that the dynamic performance of the transmission is virtually independent of the instantaneous transmission ratio. These aspects are of benefit to the simplicity and robustness of the transmission control responsible for effecting the clamping forces.

The present invention provides a number of exemplary embodiments of the transmission, in which the said equilibrium clamping force ratio is realized in an advantageous way, which examples are described below with reference to the appended explanatory figures.

Figure 1 diagrammatically depicts a cross section through a continuously variable transmission provided with two pulleys and a drive belt in accordance with the prior art.

Figure 2 shows a simplified side view of the transmission shown in Figure 1.

Figure 3 shows a cross section through the push belt which can preferably be used as the drive belt in the continuously variable transmission according to the invention.

Figure 4 shows a side view of a transverse element from the push belt shown in Figure 3.

Figure 5 shows a detail of a pulley disc, and in particular its contact surface, as can be used in combination with the push belt shown in Figure 3 in the continuously variable transmission according to the invention.

Figure 6 illustrates the difference in clamping force between the primary pulley and the secondary pulley as a result of the transmission ratio.

Figure 7 uses a small part of a curved drive belt to illustrate the relationship between a tensile stress therein and a force component which is exerted in the radially inward direction.

Figure 8 shows a diagram which plots the equilibrium clamping force ratio which has been theoretically approximated against the transmission ratio of the known transmission with a constant contact angle of 11 degrees for both pulleys.

Figure 9 shows a diagram in which what is known as the contact angle contour for the primary and secondary pulleys is plotted against the transmission ratio, with the theoretically approximated equilibrium clamping force ratio being equal to 1 irrespective of this transmission ratio.

Figure 10 illustrates, in a tangential cross section of the drive belt and a pulley, the play of forces in the contact between them under the influence of the axial clamping force which is exerted.

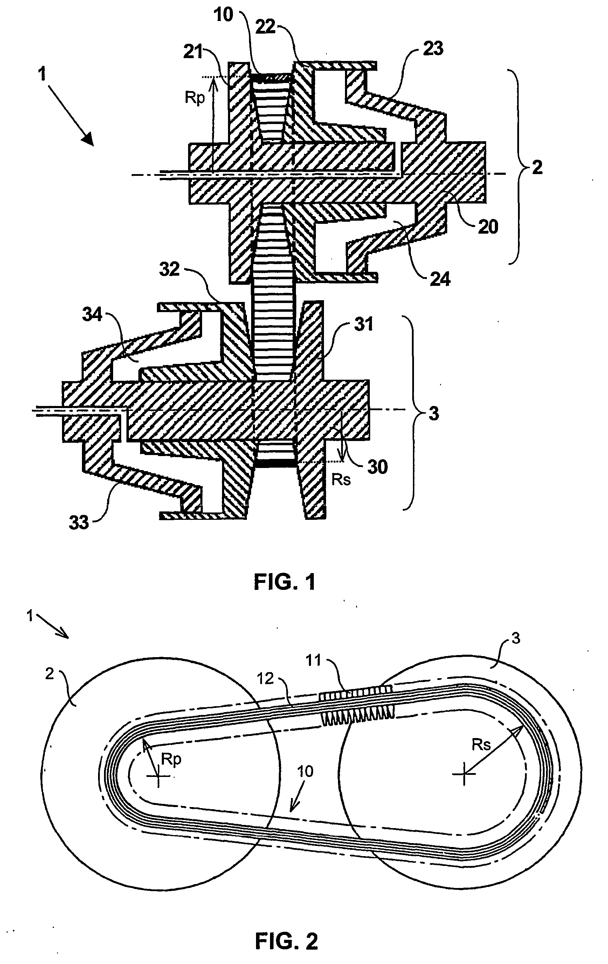

Figure 1 diagrammatically depicts a cross section through a continuously variable transmission 1 according to the prior art. The known transmission 1 comprises a primary pulley 2, which can be driven by an engine (not shown) with a couple of forces $T_p$, and a secondary pulley 3, which can drive a load (not shown) with couple of forces $T_s$. Both pulleys 2 and 3 are provided with a pulley disc 21, 31, which is fixed to the respective pulley axle 20, 30, and with a pulley disc 22, 32 which can be displaced in the axial direction with respect to the said axle 20, 30. A drive belt 10, more particularly a push belt 10, is clamped between the pulley discs 21, 22, 31, 32, so that with the aid of friction mechanical power can be transmitted between the two axles 20 and 30. An axially oriented force with which the drive belt 10 is clamped in place for each pulley 2, 3, referred to below as the primary clamping force $K_p$ and the secondary clamping force $K_s$, respectively, is in this case realized by the application of a hydraulic pressure in a respective pressure chamber 24, 34 of the two pulleys 2 and 3.

The transmission ratio $R_s/R_p$ of the transmission 1 is determined by the ratio between a secondary running radius $R_s$ and a primary running radius $R_p$ of the drive belt 10, i.e. the effective radial position thereof between the pulley discs 21, 22, 31 and 32 of the respective pulleys 2 and 3. The said running radii $R_p$ and $R_s$, and therefore the transmission ratio $R_s/R_p$, defined in accordance with the invention, of the transmission 1 can be varied by the displaceable discs 22, 32 being moved in opposite axial directions over the respective pulley axles, 20, 30. In Figure 1, the transmission 1 is illustrated with a small transmission ratio $R_s/R_p$, i.e. with a relatively large primary running radius $R_p$ and a relatively small secondary running radius $R_s$.

It should be noted that the transmission ratio $R_s/R_p$, the primary running radius $R_p$ and the secondary running radius $R_s$ are in a clearly defined and geometrically determined relationship with respect to one another, this relationship being determined, inter alia, by the length of the drive belt 10, the distance between the axes of rotation of the respective pulleys 2, 3 and the maximum and minimum running radii $R_p$ and $R_s$, so that these variables can be calculated from the others as desired.

Figure 2 shows a further, side view of the known transmission 1, with the primary pulley 2 with the primary axle 20 on the left-hand side of the figure and the secondary pulley 3 with the secondary axle 30 on the right-hand side of the figure. Unlike in Figure 1, in this figure the transmission 1 is now illustrated with a relatively high transmission ratio $R_s/R_p$, in which the primary running radius $R_p$ is smaller than the secondary running radius $R_s$, with the result that, during operation, the primary pulley 2 will have a lower rotational speed than the secondary pulley 3. The drive belt 10 shown is what is known as a push belt 10, which comprises a virtually continuous series of transverse elements 11, only a few of which are shown, for the sake of simplicity, and at least one set 12 of a number of radially nested, continuous, flat and thin metal rings.

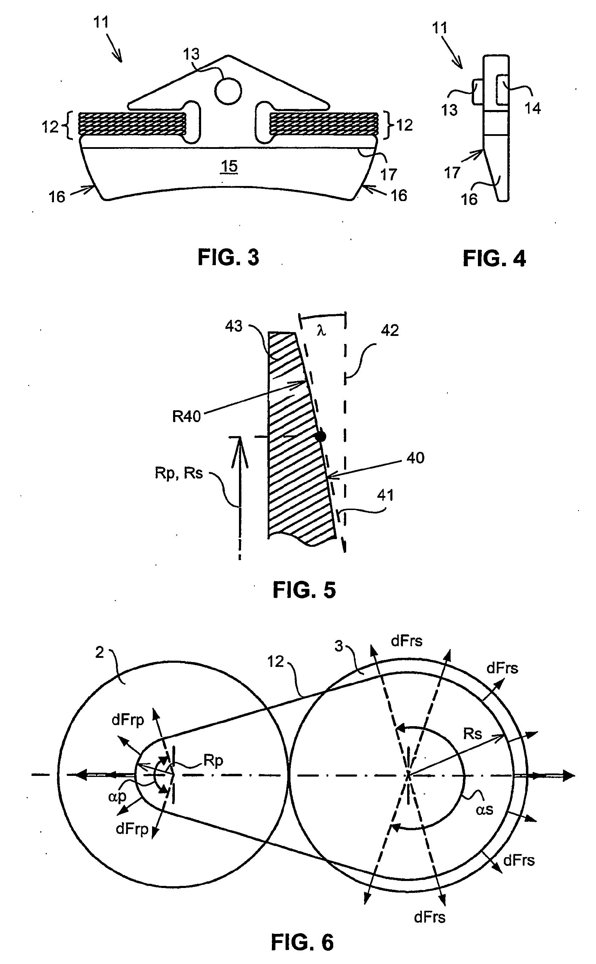

This push belt 10 is shown in more detail in Figures 3 and 4, Figure 3 showing a cross section through the push belt 10 and Figure 4 showing a side view of a transverse element 11 therefrom. The cross section shows a front view of the transverse element 11, which is provided on either side with a recess, in each of which there is a set of rings 12. The set of rings 12 and the transverse element 11 retain one another in the radial or height direction, but the transverse elements 11 can move along the sets of rings 12 in the circumferential direction thereof. Furthermore, the transverse elements 11 are provided with a protuberance in the circumferential direction of the push belt 10, also referred to as the projection 13, and with a recess 14 arranged in an opposite main side of the element 11, which projection 13 and recess 14 serve to stabilize the series of transverse elements 11 in the push belt 10 with respect to one another.

A bottom section 15 of the transverse element 11 tapers, so that adjacent transverse elements 11 can tilt with respect to one another and the push belt 10 can describe an arc, such as where it is clamped between the pulley discs 21, 22, 31, 32 of the respective pulleys 2 and 3. It should be noted that the abovementioned effective radial position, i.e. the effective running radius Rp, Rs of the push belt 10, substantially corresponds to a radial position of the topside of the bottom section 15 of the transverse element 11, which topside is also referred to as the tilting line 17 of the transverse elements 10, along which the latter are in contact with one another in the said arc. The bottom section 15 is furthermore provided, on either side with what are known as running surfaces 16, via which the transverse element 11 is clamped between the pulley discs 21, 22; 31 32, the rotation of a driving pulley 2 being transmitted via friction to the clamped transverse elements 11. This may give rise to a considerable pushing force between the transverse elements 11, with the result that they push one another forward over the sets of rings 12 in the direction of the driven pulley 3. Then, where the push belt 10 is clamped between the discs 31 and 32 of the driven pulley 3, the pushing force which is present between the transverse elements 11 is virtually completely transmitted via friction to the driven pulley 3. Finally, the transverse elements 11 push one another back, exerting a relatively low pushing force, from the driven pulley 3 to the driving pulley 2. The sets of rings 12 in this case ensure that the transverse elements 11 continue to follow the path which is intended for the push belt 10.

Figure 5 illustrates a detail of a pulley disc 43 on the basis of a cross section through it as seen in the tangential direction. A so-called contact surface 40 of the pulley disc 43, by means of which it comes into contact with a running surface 16 of the transverse elements 11, is provided with a curvature with an optionally variable radius of curvature R40, with a contact angle $\lambda$, defined between a tangent line 41 in a point R on the contact surface 40 and the radial direction 42, increasing as seen in the said radial direction. Therefore, the contact surfaces 40 in the transmission 1, as seen in the tangential cross section, describe a contour which can be defined as the relationship between the local contact angle $\lambda$ and the transmission ratio Rs/Rp of the transmission 1. For each pulley 2, 3, the said contour is referred to as the primary contact angle contour $\lambda p(Rs/Rp)$ and the secondary contact angle contour $\lambda s(Rs/Rp)$, respectively, with the fixed and moveable discs 21, 22, 31 and 32 of a pulley 2, 3 being provided with identical contours. It is also preferable for the two pulleys 2 and 3 to be identical in form, i.e. to be provided with contact angle contours $\lambda p(Rs/Rp)$ and $\lambda s(Rs/Rp)$ which are mirror-symmetrical with respect to one another.

In order to be able to interact optimally with the curved contact surfaces 40 of the pulleys 2 and 3, the running surfaces 16 of the transverse element 11, as seen in the cross section of the push belt 10 illustrated in Figure 3, are provided with a curvature. In this case, a range of contact angles $\lambda$ which at least corresponds to contact angle contours $\lambda p(Rs/Rp)$ and $\lambda s(Rs/Rp)$ defined by the contact surfaces 40 of the pulleys 2 and 3, is defined in the contour of the running surfaces 16.

The clamping force ratio, the KpKs ratio, which is required for an equilibrium state of the transmission 1, i.e. for a constant transmission ratio, originates from the equilibrium condition whereby per pulley 2, 3 the tensile forces Ft generated in the belt sets 12 of the drive belt 10 should be equal to one another. This equilibrium condition is illustrated in Figure 6. For each pulley 2 and 3, the tensile force Ft is produced as a result of the radial forces Frp and Frs, respectively, acting on the drive belt 10 in the radial direction, which forces Frp and Frs are produced as a result of the local contact angle $\lambda p$, $\lambda s$ and the clamping force Kp, Ks which is applied between the discs 21 and 22, 31 and 32 respectively, for each pulley 2, 3 and is substantially axially oriented. When this is written out for the primary pulley 2, the following relationship applies:

$$Frp = Kp * \tan(\lambda p) \qquad\qquad\qquad (2)$$

The radial forces Frp and Frs act on the running surfaces 16 of the transverse elements 11 over the length of the parts of the drive belt 10 which are clamped between the pulley discs 21, 22, 31, 32 of the respective primary pulley 2 and secondary pulley 3. The said length can be quantified for each pulley 2, 3 as an angle which is enclosed by the clamped part of the drive belt 10, designated here as the primary belt angle $\alpha p$ and the secondary belt angle $\alpha s$, respectively. The radial forces Frp and Frs which are required for equilibrium are then determined by summing, over the respective belt angles $\alpha p$ and $\alpha s$, the tensile force Ft per unit of the belt angle $d\alpha$. When written out for the primary pulley 2, the following relationship therefore applies:

$$Frp = \int_0^{\alpha p} \frac{Ft}{Rp} * Rp * d\alpha \qquad (3)$$

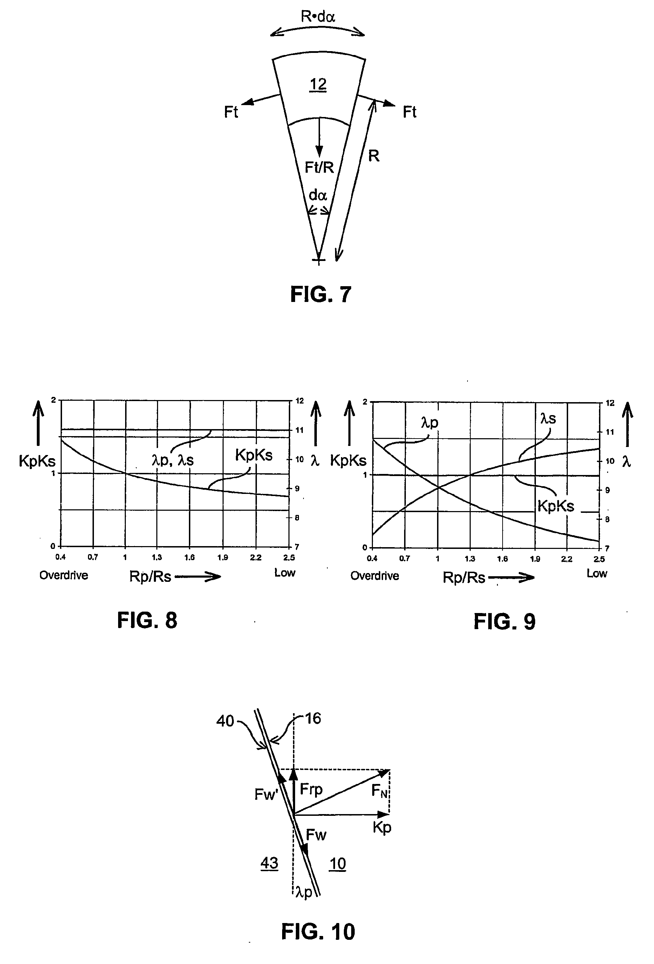

The derivation of equation (3) is illustrated in Figure 7 on the basis of a small part of the belt set 12.

Equations (2) and (3) can be derived in a corresponding way for the secondary pulley 3, with the said equilibrium condition for a constant transmission ratio whereby the tensile stress Ft which is generated applies to both pulleys 2 and 3, so that the following relationship applies to the equilibrium clamping force ratio KpKs:

$$KpKs = \frac{Kp}{Ks} = \frac{\tan(\lambda s)}{\tan(\lambda p)} * \frac{\int_0^{\alpha p} Ft * d\alpha}{\int_0^{\alpha s} Ft * d\alpha} = \frac{\tan(\lambda s) * \alpha p}{\tan(\lambda p) * \alpha s} \qquad (4)$$

in which the belt angles $\alpha p$ and $\alpha s$ vary as a function of the respective running radius Rp, Rs and therefore also as a function of the transmission ratio Rs/Rp. A relationship of this nature between the belt angles $\alpha p$ and $\alpha s$ and the running radii Rs and Rp is determined by the geometry of the transmission 1 and may, for example, be approximated relatively accurately as:

$$\alpha_p = \pi + 2 * \arcsin\left(\frac{Rp - Rs}{2 * Rp_{MAX}}\right) \quad \text{and} \quad \alpha s = 2\pi - \alpha p \qquad (5)$$

with Rs(Rp, Rp$_{MIN}$, Rp$_{MAX}$):

$$2 * \sqrt{(2 * Rp_{MAX})^2 - (Rs - Rp)^2} + \pi * (Rs + Rp) +$$
$$2 * \arcsin(\frac{Rs - Rp}{2 * Rp_{MAX}}) * (Rs - Rp) = 2 * \sqrt{(2 * Rp_{MAX})^2 - (Rp_{MAX} - Rp_{MIN})^2} + \qquad (6)$$
$$\pi * (Rp_{MAX} + Rp_{MIN}) + 2 * \arcsin(\frac{Rp_{MAX} - Rp_{MIN}}{2 * Rp_{MAX}}) * (Rp_{MAX} - Rp_{MIN})$$

where Rp$_{MIN}$ is the smallest primary running radius Rp which occurs and Rp$_{MAX}$ is the largest primary running radius Rp which occurs. In the derivation of equations (5) and (6), it has been assumed that the two pulleys 2 and 3 are positioned as close together as possible in the radial direction, as is the case, for example, in Figure 6, but as is also generally desired in motor vehicles.

The solution, which is to be determined iteratively or numerically, to equations (4), (5) and (6) for the KpKs ratio in relation to the transmission ratio Rs/Rp, with the contact angles $\lambda p$ and $\lambda s$ having a constant and equal value - in this example 11 degrees - is given in Figure 8.

It can be concluded from the above analysis, which, incidentally, is independent of the type of drive belt 10, meaning that it applies not only to the push belt 10 shown in Figures 2-4 but also to a rubber V belt, a metal chain or the like, that the KpKs ratio can be influenced by selecting values for the primary contact angle $\lambda p$ and/or the secondary contact angle $\lambda s$ which differ from one another. The ratio between the contact angles $\lambda p$, $\lambda s$ as a function of the transmission ratio Rs/Rp of the transmission, with the equilibrium ratio of the clamping forces Kp and Ks - referred to as the KpKs curve - advantageously being equal to 1 for all the transmission ratios Rs/Rp, should in this case satisfy equation (4) with Kp/Ks=1:

$$\frac{\tan(\lambda s)}{\tan(\lambda p)} = \frac{\alpha s}{\alpha p} \qquad (7)$$

Incidentally, it follows from equation (7) that the contact angles $\lambda p$, $\lambda s$ should be equal in value in the transmission ratio Rs/Rp in which the belt angles $\alpha p$ and $\alpha s$ - and therefore also the running radii Rp and Rs - are equal to one another.

One possible solution to equation 7 is shown in the diagram in Figure 9, in which the respective contact angle $\lambda p$, $\lambda s$ for the primary pulley 2 and the secondary pulley 3 is plotted against the transmission ratio Rs/Rp in the so-called contact angle contours $\lambda p$(Rs/Rp) and $\lambda s$(Rs/Rp). The theoretically approximated KpKs ratio is in this case, therefore equal to 1 in all possible transmission ratios Rs/Rp. The diagram shown in Figure 9 applies to a typical transmission 1 with a smallest primary running radius $Rp_{MIN}$ of approximately 30 mm and with a largest primary running radius $Rp_{MAX}$ of approximately 75 mm combined with an equal and smallest possible radial dimension of the pulleys 2 and 3.

The boundary condition required to solve equation (7) was in this case that the contact angle contours $\lambda p$(Rs/Rp) and $\lambda s$(Rs/Rp) for each pulley 2, 3 be a continuous curve, respectively rising continuously on the secondary pulley 3 and falling continuously on the primary pulley (2). In addition, according to the invention the lower limit for the contact angles $\lambda p$ and $\lambda s$, on the one hand, is preferably selected to be as low as possible, since as a result the radial force Frp, Frs and therefore also the tensile force Ft in the belt sets 12 will advantageously be low. After all, the said tensile force Ft makes no contribution to the transfer of the torque Tp supplied, since it has a constant level. At the same time, the belt sets 12 are subjected to mechanical load by the tensile force Ft. On the other hand, according to the invention, under all circumstances it must be possible for the drive belt 10 to be displaced in the radial direction between the pulley discs 21, 22, 31 32, in order to allow the transmission ratio Rs/Rp to be altered. For this purpose, the said radial force Frp must be able to overcome at least a friction Fw between the drive belt 10 and a pulley 2, 3. Written out for the primary pulley 2, the following relationship then applies:

$$\frac{Kp}{\cos(\lambda p)} * \tan(\lambda) = \frac{Frp}{\cos(\lambda p)} = Fw' > Fw = \mu_R * Fn = \mu_R * \frac{Kp}{\cos(\lambda p)} \qquad (8)$$

where $\mu_R$ is a coefficient of friction which is measured in the radial direction in the contact between a running surface 16 of the drive belt 10 and the contact surface 40 of a pulley disc 43, and where Fn is a normal force in that contact. Equation (8) is schematically illustrated in Figure 10, which shows the forces - Kp, Fw, Frp, Fn - which are active within the said contact. Equation (8) gives rise to the condition that a contact angle $\lambda$ must be greater than the arc-tangent of the radial coefficient of friction $\mu_R$. In the lubricated metal/metal contact between the pulleys 2 and 3 and the drive belt 10 of the transmission, a maximum value of approximately 0.12 typically applies for $\mu_R$. Therefore, according to the invention the primary contact angle $\lambda p$ in Low and the secondary contact angle $\lambda s$ in Overdrive is preferably at least equal to 7 degrees. The complete contact angle contours $\lambda p$(Rs/Rp) and $\lambda s$(Rs/Rp) can then be approximated iteratively using equations (4), (5), (6) and (7).

Yet another suitable boundary condition may be that the discs 21, 22, 31 and 32 of the pulleys should be shaped identically, which is advantageous in particular in terms of production and assembly engineering consideration.

## Claims

1. Continuously variable transmission (1) for transmitting a couple of forces (Tp) with a variable transmission ratio in particular in motor vehicles, provided with a primary pulley (2) and with a secondary pulley (3), around which there is arranged a drive belt which is provided on either side with a substantially axially oriented running surface (16) for contact with a substantially axially oriented contact surface (40) of one of two conical pulley discs (21, 22; 31, 32) of each pulley (2; 3) and is clamped, over what is referred to as a primary belt angle ($\alpha p$), between the pulley discs (21, 22) of the primary pulley (2) with an axially oriented primary clamping force (Kp) and is clamped, over what is referred to as a secondary belt angle ($\alpha s$), between the pulley discs (31, 32) of the secondary pulley (3) with an axially oriented secondary clamping force (Ks), it being possible for an effective radial position (Rp) of the drive belt (10) between the pulley discs (21, 22) of the primary pulley (2) and an effective radial position (Rs) between the pulley discs (31, 32) of the secondary pulley (3) to vary in opposite directions, with the result that the transmission ratio (Rs/Rp) of the transmission (1) can vary between a maximum value, known as Low, and a minimum value, known as Overdrive, and at least one running surface (16) of the drive belt (10) being in contact with a contact surface (40) of the primary pulley (2) and with a contact surface (40) of the secondary pulley (3) at a primary contact angle ($\lambda$p) and a secondary contact angle ($\lambda$s), respectively, with respect to the radial direction, **characterized in that** at least in Overdrive or in Low the contact angles ($\lambda$p, $\lambda$s) and the belt angles ($\alpha$p, $\alpha$s) at least virtually satisfy the following equation:

$$\frac{\tan\{\text{secondary contact angle }(\lambda s)\}}{\tan\{\text{primary contact angle }(\lambda p)\}} = \frac{\text{primary belt angle} \quad (\alpha s)}{\text{secondary belt angle}\,(\alpha p)}$$

2. Continuously variable transmission (1) for transmitting a couple of forces (Tp) with a variable transmission ratio in particular in motor vehicles, provided with a primary pulley (2) and with a secondary pulley (3), around which there is arranged a drive belt which is provided on either side with a substantially axially oriented running surface (16) for contact with a substantially axially oriented contact surface (40) of one of two conical pulley discs (21, 22; 31, 32) of each pulley (2; 3) and is clamped, over what is referred to as a primary belt angle ($\alpha$p), between the pulley discs (21, 22) of the primary pulley (2) with an axially oriented primary clamping force (Kp) and is clamped, over what is referred to as a secondary belt angle ($\alpha$s), between the pulley discs (31, 32) of the secondary pulley (3) with an axially oriented secondary clamping force (Ks), it being possible for an effective radial position (Rp) of the drive belt (10) between the pulley discs (21, 22) of the primary pulley (2) and an effective radial position (Rs) between the pulley discs (31, 32) of the secondary pulley (3) to vary in opposite directions, with the result that the transmission ratio (Rs/Rp) of the transmission (1) can vary between a maximum value, known as Low, and a minimum value, known as Overdrive, and at least one running surface (16) of the drive belt (10) being in contact with a contact surface (40) of the primary pulley (2) and with a contact surface (40) of the secondary pulley (3) at a primary contact angle ($\lambda$p) and a secondary contact angle ($\lambda$s), respectively, with respect to the radial direction, **characterized in that** at least in Overdrive or in Low the contact angles ($\lambda$p, $\lambda$s) have different values, in which case the primary clamping force (Kp) and secondary clamping force (Ks) required for the respective transmission ratio (Rs/Rp) are at least virtually equal.

3. Transmission (1) according to Claim 1 or 2, **characterized in that** in Overdrive or in Low a ratio between the tangents of the contact angles ($\lambda$p, $\lambda$s) is in the range between 1.4 and 1.5 or between $1.4^{-1}$ and $1.5^{-1}$.

4. Transmission (1) according to Claim 1, 2 or 3, **characterized in that** in all its transmission ratios (Rs/Rp), the contact angles ($\lambda$p, $\lambda$s) and the belt angles ($\alpha$p, $\alpha$s) at least virtually satisfy the following equation:

$$\frac{\tan\{\text{secondary contact angle }(\lambda s)\}}{\tan\{\text{primary contact angle }(\lambda p)\}} = \frac{\text{primary belt angle} \quad (\alpha s)}{\text{secondary belt angle}\,(\alpha p)}$$

5. Transmission (1) according to one of the preceding claims, **characterized in that** in all its transmission ratios (Rs/Rp), the primary clamping force (Kp) and the secondary clamping force (Ks) are at least virtually equal.

6. Transmission (1) according to one of the preceding claims, **characterized in that** the tangent of the smallest value of the contact angles ($\lambda$p, $\lambda$s) is equal to or greater than a coefficient of friction between the drive belt (10) and the pulley discs (21, 22; 31, 32) of the respective pulley (2, 3) in the radial direction, with preferably at least one of these tangents being virtually equal to the said coefficient of friction.

7. Transmission (1) according to one of the preceding claims, **characterized in that** the contact angles ($\lambda$p, $\lambda$s) have a value in the range from 7 to 11 degrees.

8. Transmission (1) according to one of the preceding claims, **characterized in that** for at least one of the clamping forces (Kp, Ks) the level of clamping force which is actually effected in the transmission (1) is at least virtually equal to 1.3 times the level of a minimum clamping force required to transmit a couple which is supplied.

9. Transmission (1) according to one of the preceding claims, **characterized in that** the drive belt (10) is what is known as a push belt (10), which push belt (10) comprises a virtually continuous series of transverse elements (11) and at least one continuous ring (12), the transverse elements (11) being arranged on the ring (12) in such a manner that they can move over the circumferential direction of the ring (12).

**Patentansprüche**

1. Stufenloses Getriebe (1) zur Übertragung eines Kräftemoments (Tp) mit einem variablen Übersetzungsverhältnis insbesondere in Kraftfahrzeugen, das mit einer Primärrolle (2) und mit einer Sekundärrolle (3) versehen ist, um die herum ein Antriebsriemen angeordnet ist, der auf jeder Seite mit einer im Wesentlichen axial ausgerichteten Lauffläche (16) zum Kontakt mit einer im Wesentlichen axial ausgerichteten Kontaktfläche (40) einer der beiden konischen Rollenscheiben (21, 22; 31, 32) jeder Rolle (2; 3) versehen und mit einer axial ausgerichteten Primärklemmkraft (Kp) über einen so genannten Sekundärriemenwinkel ($\alpha$S) zwischen den Rollenscheiben (21, 22) der Primärrolle (2) und mit einer axial ausgerichteten Sekundärklemmkraft (Ks) über einen so genannten Sekundärriemenwinkel ($\alpha$s) zwischen den Rollenscheiben (31, 32) der Sekundärrolle (3) festgeklemmt ist, wobei es für eine effektive Radialposition (Rp) des Antriebsriemens (10) zwischen den Rollenscheiben (21, 22) der Primärrolle (2) und eine effektive Radialposition (Rs) zwischen den Rollenscheiben (31, 32) der Sekundärrolle (3) möglich ist, in entgegengesetzten Richtungen zu variieren, mit dem Ergebnis, dass das Übersetzungsverhältnis (Rs/Rp) des Getriebes (1) zwischen einem Maximalwert, der als Niedrig bekannt ist, und einem Minimalwert, der als Overdrive bekannt ist, variieren kann, und wobei mindestens eine Lauffläche (16) des Antriebsriemens (10) mit einer Kontaktfläche (40) der Primärrolle (2) und mit einer Kontaktfläche (40) der Sekundärrolle (3) in einem Primärkontaktwinkel ($\lambda$p) bzw. einem Sekundärkontaktwinkel ($\lambda$s) bezüglich der Radialrichtung in Kontakt steht, **dadurch gekennzeichnet, dass** mindestens in Overdrive oder in Niedrig die Kontaktwinkel ($\lambda$p, $\lambda$s) und die Riemenwinkel ($\alpha$p, $\alpha$s) zumindest in etwa die folgende Gleichung erfüllen:

$$\frac{\tan\{\text{Sekundärkontaktwinkel }(\lambda s)\}}{\tan\{\text{Primärkontaktwinkel }(\lambda p)\}} = \frac{\text{Sekundärriemenwinkel }(\alpha s)}{\text{Primärriemenwinkel }(\alpha p)}$$

2. Stufenloses Getriebe (1) zur Übertragung eines Kräftemoments (Tp) mit einem variablen Übersetzungsverhältnis insbesondere in Kraftfahrzeugen, das mit einer Primärrolle (2) und mit einer Sekundärrolle (3) versehen ist, um die herum ein Antriebsriemen angeordnet ist, der auf jeder Seite mit einer im Wesentlichen axial ausgerichteten Lauffläche (16) zum Kontakt mit einer im Wesentlichen axial ausgerichteten Kontaktfläche (40) einer der beiden konischen Rollenscheiben (21, 22; 31, 32) jeder Rolle (2; 3) versehen und mit einer axial ausgerichteten Primärklemmkraft (Kp) über einen so genannten Primärriemenwinkel ($\alpha$p) zwischen den Rollenscheiben (21, 22) der Primärrolle (2) und mit einer axial ausgerichteten Sekundärklemmkraft (Ks) über einen so genannten Sekundärriemenwinkel ($\alpha$s) zwischen den Rollenscheiben (31, 32) der Sekundärrolle (3) festgeklemmt ist, wobei es für eine effektive Radialposition (Rp) des Antriebsriemens (10) zwischen den Rollenscheiben (21, 22) der Primärrolle (2) und einer effektiven Radialposition (Rs) zwischen den Rollenscheiben (31, 32) der Sekundärrolle (3) möglich ist, in entgegengesetzten Richtungen zu variieren, mit dem Ergebnis, dass das Übersetzungsverhältnis (Rs/Rp) des Getriebes (1) zwischen einem Maximalwert, der als Niedrig bekannt ist, und einem Minimalwert, der als Overdrive bekannt ist, variieren kann, und wobei mindestens eine Lauffläche (16) des Antriebsriemens (10) mit einer Kontaktfläche (40) der Primärrolle (2) und mit einer Kontaktfläche (40) der Sekundärrolle (3) in einem Primärkontaktwinkel ($\lambda$p) bzw. einem Sekundärkontaktwinkel ($\lambda$s) bezüglich der Radialrichtung in Kontakt steht, **dadurch gekennzeichnet, dass** mindestens in Overdrive oder in Niedrig die Kontaktwinkel ($\lambda$p, $\lambda$s) verschiedenen Werte aufweisen, in welchem Fall dann die Primärklemmkraft (Kp) und die Sekundärklemmkraft (Ks), die für das jeweilige Übersetzungsverhältnis (Rs/Rp) erforderlich sind, zumindest in etwa gleich sind.

3. Getriebe (1) nach Anspruch 1 oder 2, **dadurch gekennzeichnet, dass** in Overdrive oder in Niedrig ein Verhältnis zwischen den Tangenten der Kontaktwinkel ($\lambda$p, $\lambda$s) in einem Bereich zwischen 1,4 und 1,5 oder zwischen $1,4^{-1}$ und $1,5^{-1}$ liegt.

4. Getriebe (1) nach Anspruch 1, 2 oder 3, **dadurch gekennzeichnet, dass** die Kontaktwinkel ($\lambda$p, $\lambda$s) und die Riemenwinkel ($\alpha$p, $\alpha$s) in all ihren Übersetzungsverhältnissen (Rs/Rp) zumindest in etwa die folgende Gleichung erfüllen:

$$\frac{\tan\{\text{Sekundärkontaktwinkel } (\lambda s)\}}{\tan\{\text{Primärkontaktwinkel } (\lambda p)\}} = \frac{\text{Sekundärriemenwinkel } (\alpha s)}{\text{Primärriemenwinkel } (\alpha p)}$$

**5.** Getriebe (1) nach einem der vorhergehenden Ansprüche, **dadurch gekennzeichnet, dass** die Primärklemmkraft (Kp) und die Sekundärklemmkraft (Ks) in all ihren Übersetzungsverhältnissen (Rs/Rp) zumindest in etwa gleich sind.

**6.** Getriebe (1) nach einem der vorhergehenden Ansprüche, **dadurch gekennzeichnet, dass** die Tangente des kleinstes Wertes der Kontaktwinkel ($\lambda$p, $\lambda$s) größer gleich ein Reibungskoeffizient zwischen dem Antriebsriemen (10) und den Rollenscheiben (21, 22; 31, 32) der jeweiligen Rolle (2, 3) in Radialrichtung ist, wobei vorzugsweise mindestens eine dieser Tangenten in etwa gleich dem Reibungskoeffizienten ist.

**7.** Getriebe (1) nach einem der vorhergehenden Ansprüche, **dadurch gekennzeichnet, dass** die Kontaktwinkel ($\lambda$p, $\lambda$s) einen Wert in einem Bereich von 7 bis 11 Grad aufweisen.

**8.** Getriebe (1) nach einem der vorhergehenden Ansprüche, **dadurch gekennzeichnet, dass** für mindestens eine der Klemmkräfte (Kp, Ks) die Höhe der Klemmkraft, die im Getriebe (1) tatsächlich bewirkt wird, zumindest in etwa gleich dem 1,3-Fachen der Höhe einer minimalen Klemmkraft ist, die zur Übertragung eines zugeführten Moments erforderlich ist.

**9.** Getriebe (1) nach einem der vorhergehenden Ansprüche, **dadurch gekennzeichnet, dass** der Antriebsriemen (10) als Schubriemen (10) bekannt ist, der eine in etwa durchgehende Reihe von Querelementen (11) und mindestens einen durchgehenden Ring (12) umfasst, wobei die Querelemente (11) so am Ring (12) angeordnet sind, dass sie sich über die Umfangsrichtung des Rings (12) bewegen.

**Revendications**

**1.** Transmission à changement de vitesses continu (1) pour transmettre un couple de forces (Tp) avec un rapport de transmission variable, en particulier dans les véhicules à moteur, pourvue d'une poulie primaire (2) et d'une poulie secondaire (3), autour desquelles est disposée une courroie de transmission qui est pourvue de chaque côté d'une surface de circulation orientée sensiblement dans le sens axial (16) pour le contact avec une surface de contact orientée sensiblement dans le sens axial (40) d'un de deux disques coniques de poulie (21, 22 ; 31, 32) de chaque poulie (2 ; 3) et qui est serrée, à un angle désigné en tant qu'angle de courroie primaire ($\alpha$p), entre les disques de poulie (21, 22) de la poulie primaire (2) avec une force de serrage primaire orientée dans le sens axial (Kp) et qui est serrée, à un angle désigné en tant qu'angle de courroie secondaire ($\alpha$s), entre les disques de poulie (31, 32) de la poulie secondaire (3) avec une force de serrage secondaire orientée dans le sens axial (Ks), avec la possibilité qu'une position radiale effective (Rp) de la courroie de transmission (10) entre les disques de poulie (21, 22) de la poulie primaire (2) et qu'une position radiale effective (Rs) entre les disques de poulie (31, 32) de la poulie secondaire (3) varient dans des directions opposées, avec pour résultat que le rapport de transmission (Rs/Rp) de la transmission (1) peut varier entre une valeur maximum, connue en tant que Réduction maximum, et une valeur minimum, connue en tant que Surmultiplication, au moins une surface de circulation (16) de la courroie de transmission (10) étant en contact avec une surface de contact (40) de la poulie primaire (2) et avec une surface de contact (40) de la poulie secondaire (3) à un angle de contact primaire ($\lambda$p) et à un angle de contact secondaire ($\lambda$s), respectivement, par rapport à la direction radiale, **caractérisée en ce qu'**au moins en Surmultiplication ou en Réduction maximum les angles de contact ($\lambda$p, $\lambda$s) et les angles de courroie ($\alpha$p, $\alpha$s) satisfont au moins l'équation suivante :

$$\frac{\tan\{\text{angle de contact secondaire } (\lambda s)\}}{\tan\{\text{angle de contact primaire } (\lambda p)\}} = \frac{\text{angle de courroie secondaire} (\alpha s)}{\text{angle de courroie primaire} (\alpha p)}$$

**2.** Transmission à changement de vitesses continu (1) pour transmettre un couple de forces (Tp) avec un rapport de transmission variable, en particulier dans les véhicules à moteur, pourvue d'une poulie primaire (2) et d'une poulie secondaire (3), autour desquelles est disposée une courroie de transmission qui est pourvue de chaque côté d'une surface de circulation orientée sensiblement dans le sens axial (16) pour le contact avec une surface de contact orientée sensiblement dans le sens axial (40) d'un de deux disques coniques de poulie (21, 22 ; 31, 32) de chaque poulie (2 ; 3) et qui est serrée, à un angle désigné en tant qu'angle de courroie primaire ($\alpha$p), entre les disques de poulie (21, 22) de la poulie primaire (2) avec une force de serrage primaire orientée dans le sens axial (Kp) et qui est serrée, à un angle désigné en tant qu'angle de courroie secondaire ($\alpha$s), entre les disques de poulie (31, 32) de la poulie secondaire (3) avec une force de serrage secondaire orientée dans le sens axial (Ks), avec la possibilité qu'une position radiale effective (Rp) de la courroie de transmission (10) entre les disques de poulie (21, 22) de la poulie primaire (2) et qu'une position radiale effective (Rs) entre les disques de poulie (31, 32) de la poulie secondaire (3) varient dans des directions opposées, avec pour résultat que le rapport de transmission (Rs/Rp) de la transmission (1) peut varier entre une valeur maximum, connue en tant que Réduction maximum, et une valeur minimum, connue en tant que Surmultiplication, au moins une surface de circulation (16) de la courroie de transmission (10) étant en contact avec une surface de contact (40) de la poulie primaire (2) et avec une surface de contact (40) de la poulie secondaire (3) à un angle de contact primaire ($\lambda$p) et à un angle de contact secondaire ($\lambda$s), respectivement, par rapport à la direction radiale, **caractérisée en ce qu'**au moins en Surmultiplication ou en Réduction maximum les angles de contact ($\lambda$p, $\lambda$s) ont des valeurs différentes, auquel cas la force de serrage primaire (Kp) et la force de serrage secondaire (Ks) requises pour les rapports de transmission respectifs (Rs/Rp) sont au moins virtuellement égales.

3. Transmission (1) selon la revendication 1 ou 2, **caractérisée par le fait qu'**en Surmultiplication ou en Réduction maximum un rapport entre les tangentes des angles de contact ($\lambda$p, $\lambda$s) est dans une plage comprise entre 1,4 et 1,5 ou entre $1{,}4^{-1}$ et $1{,}5^{-1}$.

4. Transmission (1) selon la revendication 1, 2 ou 3, **caractérisée par le fait que** dans tous ses rapports de transmission (Rs/Rp), les angles de contact ($\lambda$p, $\lambda$s) et les angles de courroie ($\alpha$p, $\alpha$s) satisfont au moins l'équation suivante :

$$\frac{\tan\{\text{angle de contact secondaire } (\lambda s)\}}{\tan\{\text{angle de contact primaire } (\lambda p)\}} = \frac{\text{angle de courroie secondaire} (\alpha s)}{\text{angle de courroie primaire} (\alpha p)}$$

5. Transmission (1) selon l'une quelconque des revendications précédentes, **caractérisée par le fait que** dans tous ses rapports de transmission (Rs/Rp), la force de serrage primaire (Kp) et la force de serrage secondaire (Ks) sont au moins virtuellement égales.

6. Transmission (1) selon l'une quelconque des revendications précédentes, **caractérisée par le fait que** la tangente de la plus petite valeur des angles de contact ($\lambda$p, $\lambda$s) est égale ou supérieure à un coefficient de friction entre la courroie de transmission (10) et les disques de poulie (21, 22 ; 31, 32) de la poulie respective (2, 3) dans la direction radiale, avec préférablement au moins une de ces tangentes virtuellement égale audit coefficient de friction.

7. Transmission (1) selon l'une quelconque des revendications précédentes, **caractérisée par le fait que** les angles de contact ($\lambda$p, $\lambda$s) on une valeur comprise dans un plage de 7 à 11 degrés.

8. Transmission (1) selon l'une quelconque des revendications précédentes, **caractérisée par le fait que** pour au moins une des forces de serrage (Kp, Ks) le niveau de la force de serrage qui est effectivement exercée dans la transmission (1) est au moins virtuellement égal à 1, 3 fois le niveau d'une force de serrage minimum requise pour transmettre un couple qui est fourni.

9. Transmission (1) selon l'une quelconque des revendications précédentes, **caractérisée par le fait que** la courroie de transmission (10) est une courroie connue en tant que courroie travaillant en poussée (10), laquelle courroie travaillant en poussée (10) comprend une série virtuellement continue d'éléments transversaux (11) et au moins un anneau continu (12), les éléments transversaux (11) étant agencés sur l'anneau (12) de telle manière qu'ils peuvent se déplacer dans la direction circonférentielle de l'anneau (12).

**FIG. 1**

**FIG. 2**

**FIG. 3**

**FIG. 4**

**FIG. 5**

**FIG. 6**

FIG. 7

FIG. 8

FIG. 9

FIG. 10